# EUROPEAN PATENT SPECIFICATION

(11) **EP 2 520 538 B1**
(45) Date of publication and mention of the grant of the patent: **08.01.2014**
(21) Application number: 12166299.3
(22) Date of filing: 01.05.2012
(51) Int. Cl.: B66F 9/19, B62B 3/14, B66F 9/18

(54) **Transport unit for roll containers**
Transporteinheit für Rollcontainer
Dispositif de transport pour conteneur roulant

(30) Priority: 29.04.2011 NL 2006697; 08.09.2011 NL 2007375
(43) Date of publication of application: 07.11.2012
(73) Proprietor: Waal de, Reinier, 2811 VL Reeuwijk (NL)
(72) Inventor: Waal de, Reinier, 2811 VL Reeuwijk (NL)
(74) Representative: Verhees, Godefridus Josephus Maria

(56) References cited:
- DE-A1- 2 350 308
- DE-U1- 8 529 340
- US-A1- 2006 042 842
- US-B1- 6 168 367

## Description

### Field of the invention

The invention relates to a transport unit for transporting a plurality of nested roll containers that have two grid-like side walls.

US 6 168 367 B1 is regarded to represent the closest prior art and discloses all the features of the preamble of claim 1.

### State of the art

It should be possible for a line of nested roll containers to be transported in a simple and secure manner. In known manner this takes place by lifting a line of nested roll containers by means of a lift truck.

### Summary of the invention

It is an object of the invention to provide a transport unit for transporting roll containers by means of which a line of nested roll containers can be transported in a simple and secure manner. For this purpose the transport unit according to the invention is **characterized in that** the transport unit comprises at least one arm as well as two parallel rows of movable hooks connected to the arm and located distal from each other, while the hooks in one row can be turned towards the hooks in the other row or away from the hooks in the other row.

The hooks can preferably be moved between an operating position, in which the hooks during operation catch on the grid-like side walls of the roll containers, or extend to behind the front pillars of the side walls, and a rest position. In the latter case the hooks push the roll containers forward during transport.

The transport unit may have one arm which is positioned between the side walls of the roll containers or midway between the side walls above the side walls during operation, or have two arms which are positioned near the side walls of the containers on the inner side or outer side or above the side walls. The hooks may be rigidly attached to the arm or arms in which case the arms are moved such that the hooks catch on the grid-like side walls of the roll containers. The hooks are preferably pivotably connected to the arm while parts of the hooks starting from the free ends of the hooks are oriented in an essentially vertical or horizontal direction in a rest position, and in an operating position are oriented in an essentially horizontal or vertical direction respectively.

In an embodiment of the transport unit according to the invention the hooks can be pivoted outwards in a rest position, while the hooks in one row can be turned away from the hooks in the other row.

An advantageous embodiment of the transport unit according to the invention is **characterized in that** part of the hooks starting from the free ends are arcuate while the centre of rotation around which the hook can turn is situated in the centre of the arc of circle. As a result, the hooks can turn into the side walls in optimum fashion.

A further advantageous embodiment of the transport unit according to the invention is **characterized in that** one end of the arm has openings through which forks of a lift truck can be inserted, so that a fork lift truck can easily cooperate with the transport unit.

### Brief description of the drawings

The invention will now be described in more detail based on examples of embodiment of the transport unit according to the invention while reference is made to the appended drawing figures, in which:
Fig. 1 shows a front view of a first embodiment of the transport unit with a hooked-on roll container;
Fig. 2 shows a detailed view of the transport unit in the place of the hooks;
Fig. 3 shows a perspective view of the transport unit;
Fig. 4 shows a side view of the transport unit with a hooked-on line of nested roll containers;
Fig. 5 shows a perspective view of a second embodiment of the transport unit without any roll containers;
Fig. 6 shows the transport unit shown in Fig. 5 with roll containers coupled to it; and
Fig. 7 gives a detailed representation of the situation shown in Fig. 6.

### Detailed description of the drawings

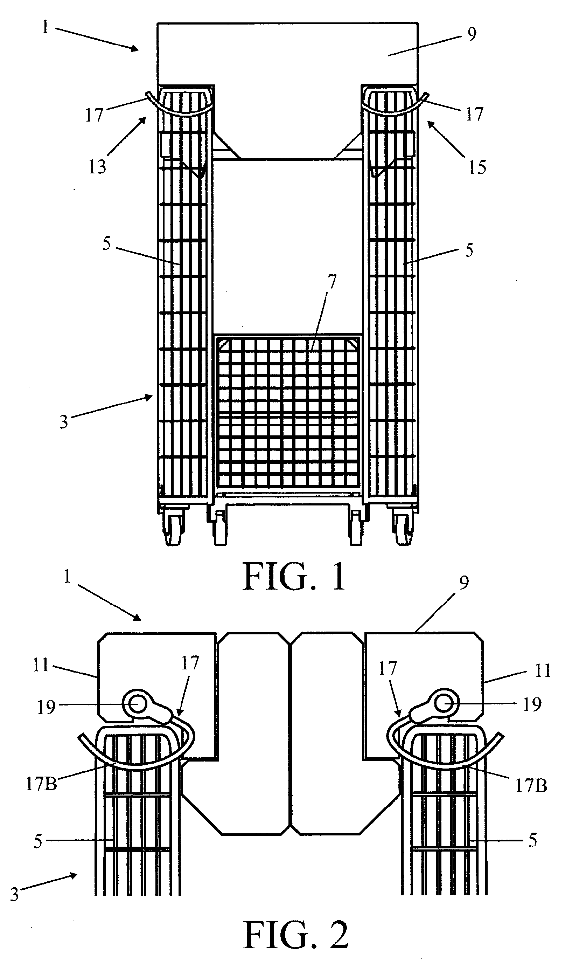

Fig. 1 shows a front view of a first embodiment of the transport unit 1 with a hooked-on roll container 3. The roll container 3 comprises two grid-like side walls 5 and a grid-like front wall 7. The transport unit 1 comprises an arm 9 with a line 13, 15 of pivotable hooks 17 along either longitudinal side 11. These hooks 17 are pivotably connected to the arm 9 and are pivotable between an operating position in which the hooks catch on the grid-like side walls 5 of the roll containers 3 during operation, and a rest position. From this rest position the hooks 17 can be pivoted outwards while the hooks in one row 13 can be turned away from the hooks in the other row 15.

Parts 17B of the hooks are oriented in an essentially vertical direction from the free ends of the hooks onwards in a rest position, and in a state of operation oriented in an essentially horizontal direction (the position shown in detail in Fig. 2).

To enable hitching, the hooks have a specially designed geometry (see Fig. 2). The part 17B of the hooks runs from the free end along an arc of circle. The pivotal centre 19 around which the hook can be pivoted is then situated in the centre of the arc of circle.

The arm 9 has openings on one end (not shown in the Figures) through which the fork of a fork lift truck can be inserted.

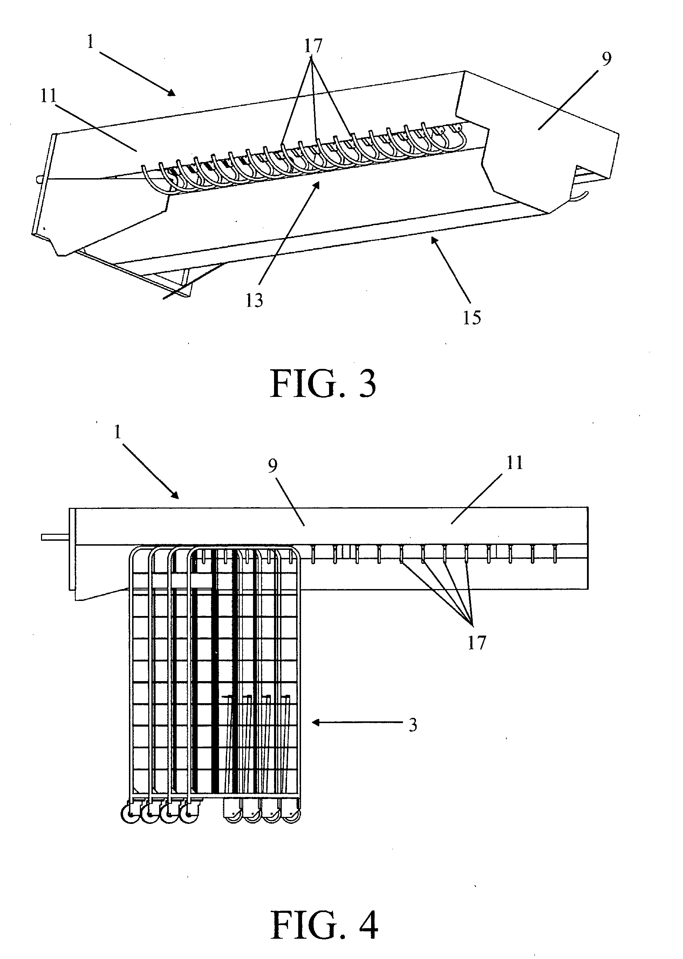

For illustrative purposes Fig. 3 gives a separate perspective view of the transport unit and Fig. 4 shows a side view of the transport unit with a row of nested roll containers hooked on to it. A packet of approximately 20 nested roll containers 3 can be transported by a lift truck by means of the transport unit 1. For this purpose the hooks 17 pivot outwards on the longitudinal sides 11 of the arm 9 and thus project through the grid-like sides 5 at the top of the roll container 3.

If the lift truck starts to lift, the roll containers 3 are suspended from the hooks 17 and can be transported in this way. Once the lift truck has arrived at its destination, the arm should be lowered, after which the hooks are pivoted inwards so that the containers have come free again.

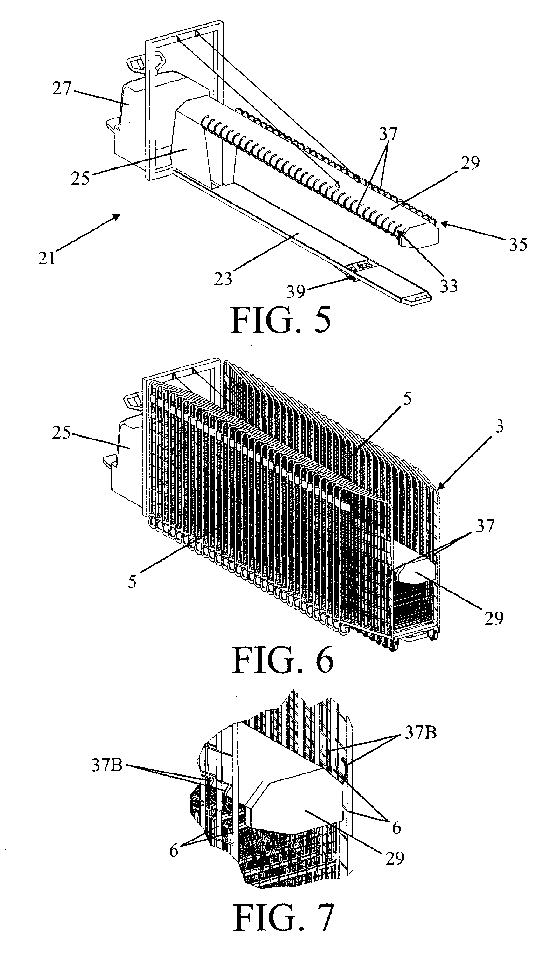

Fig. 5 shows a second embodiment of the transport unit according to the invention. This transport unit 21 is a self sustaining transport unit and need not be carried by a lift truck and to this end comprises a front projection 23 on wheels and a mounting bracket 25 at the end of it to which an arm 29 is fitted. A drive unit 27 is attached to the mounting bracket 25.

Fig. 6 shows the transport unit 21 during the transport of roll containers 3 and Fig. 7 gives a detailed representation of this seen at the front end. This transport unit 21 too comprises an arm 29 with a row 33, 35 of pivotable hooks 37 on either longitudinal side. These hooks 37 are in their turn pivotably connected to the arm 29 and are pivotable between an operating position, in which parts 37B of the hooks extend substantially in vertical direction and are positioned behind the front columns 6 of the grid-like side walls 5 of the roll containers 3, and a rest position. In this rest position the parts 37B of the hooks 37 are positioned horizontally underneath the arm 29 (not shown in the Figures). From this rest position the hooks 37 can be turned outwards, while the hooks in one row 33 can be turned away from the hooks in the other row 35.

During the transport of the roll containers 3 the hooks 37 push against the front columns 6 of the roll containers 3. It is alternatively possible for the roll containers to be lifted off the floor in that the wheels 39 under the front projection 23 are hinged down, so that the front projection 23 is raised and lifts the roll containers 3 off the floor. During transport the hooks 37 then do not push against the front pillars 6 of the roll containers 3, but are located between the wires of the grid of the side walls 5 of the roll containers so as to retain them.

Albeit the invention has been described in the foregoing with reference to the drawings, it should be observed that the invention is not by any manner or means restricted to the embodiments shown in the drawings. The invention also extends to all embodiments deviating from the embodiments shown in the drawings within the scope defined by the claims.

## Claims

1. A transport unit (1; 21) for transporting a plurality of nested roll containers (3) that have two grid-like side walls (5), **characterized in that** the transport unit (1; 21) comprises at least one arm (9; 29) as well as two parallel rows (13, 15; 33, 35) of movable hooks (17; 37) connected to the arm (9; 29) and located distal from each other, while the hooks in one row can be turned towards the hooks in the other row or away from the hooks in the other row.

2. A transport unit (1; 21) as claimed in claim 1, **characterized in that** the hooks (17; 37) can be moved between an operating position, in which the hooks during operation catch on the grid-like side walls (5) of the roll containers (3), or extend to behind the front pillars (6) of the side walls, and a rest position.

3. A transport unit (1; 21) as claimed in claim 2, **characterized in that** the hooks (17; 37) are pivotably connected to the arm (9; 29) while parts (17B; 37B) of the hooks starting from the free ends of the hooks are oriented in an essentially vertical or horizontal direction in a rest position, and in an operating position are oriented in an essentially horizontal or vertical direction respectively.

4. A transport unit (1; 21) as claimed in claim 3, **characterized in that** the hooks (17; 37) can be pivoted outwards from the rest position, while the hooks in one row can be turned away from the hooks in the other row.

5. A transport unit (1; 21) as claimed in claim 2 or 3, **characterized in that** part (17B; 37B) of the hooks starting from the free ends onwards are arcuate while the centre of rotation (19) around which the hook (17; 37B) can turn is situated in the centre of the arc of circle.

6. A transport unit (1) as claimed in any one of the preceding claims, **characterized in that** one end of the arm (9) has openings through which forks of a lift truck can be inserted.

## Patentansprüche

1. Transportvorrichtung (1; 21) zum Versetzen einer Anzahl von ineinander geschobenen, mit zwei gitterförmigen Seitenwänden (5) ausgestatteten Rollcontainern (3), **dadurch gekennzeichnet, dass** die Transportvorrichtung (1; 21) mindestens einen Arm (9; 29) enthält sowie zwei damit verbundene parallele, im Abstand von einander angeordnete Reihen (13, 15; 33, 35) verschiebbarer Haken (17; 37), wobei die Haken in der einen Reihe zu den Haken in der anderen Reihe hin oder von den Haken in der anderen Reihe weg verschiebbar sind.

2. Transportvorrichtung (1; 21) gemäß Patentanspruch 1, **dadurch gekennzeichnet, dass** die Haken (17; 37) verschiebbar sind zwischen einer Arbeitsstellung, in der die Haken bei Betrieb in die gitterförmigen Seitenwände (5) der Rollcontainer (3) einhaken oder sich bis hinter die vorderen Stäbe (6) der Seitenwände erstrecken, und einer Ruhestellung.

3. Transportvorrichtung (1; 21) gemäß Patentanspruch 2, **dadurch gekennzeichnet, dass** die Haken (17; 37) drehbar mit dem Arm (9; 29) verbunden sind, wobei Teile (17B; 37B) der Haken von den freien Enden der Haken aus in Ruhestellung in einer im Wesentlichen vertikalen oder horizontalen Richtung, und in Arbeitsstellung in einer im Wesentlichen horizontalen beziehungsweise vertikalen Richtung ausgerichtet sind.

4. Transportvorrichtung (1; 21) gemäß Patentanspruch 3, **dadurch gekennzeichnet, dass** die Haken (17; 37) in Ruhestellung nach außen verdrehbar sind, wobei die Haken in der einen Reihe von den Haken in der anderen Reihe weg verdrehbar sind.

5. Transportvorrichtung (1; 21) gemäß Patentanspruch 2 oder 3, **dadurch gekennzeichnet, dass** ein Teil (17B; 37B) der Haken von den freien Enden aus in einem Kreisbogen verläuft, wobei der Drehpunkt (19), um den der Haken (17; 37B) drehbar ist, im Mittelpunkt des Kreisbogens liegt.

6. Transportvorrichtung (1) gemäß einer der obigen Patentansprüche, **dadurch gekennzeichnet, dass** der Arm (9) an einem Ende Öffnungen hat, durch die Gabeln eines Gabelstaplers eingeschoben werden können.

## Revendications

1. Unité de transport (1; 21) pour le déplacement d'un certain nombre de conteneurs roulants (3) s'imbriquant les uns dans les autres et pourvus de deux parois latérales grillagées (5), **caractérisée en ce que** l'unité de transport (1; 21) comprend au moins un bras (9; 29), ainsi que deux rangées (13,15; 33, 35) de crochets coulissants (17; 37), les rangées étant reliées au bras, parallèles, et à distance l'une de l'autre, où les crochets de l'une des rangées peuvent coulisser vers les crochets de l'autre rangée ou depuis les crochets de l'autre rangée.

2. Unité de transport (1; 21) selon la revendication 1, **caractérisée en ce que** les crochets (17; 37) peuvent coulisser entre une position de travail où les crochets, pendant fonctionnement, s'accrochent dans les parois latérales grillagées (5) des conteneurs roulants (3) ou s'étendent jusque derrière les premiers barreaux (6) des parois latérales, et une position de repos.

3. Unité de transport (1; 21) selon la revendication 2, **caractérisée en ce que** les crochets (17; 37) sont reliés de façon pivotante au bras (9; 29), où, en position de repos, des parties (17B; 37B) des crochets sont orientées dans une direction principalement verticale ou horizontale depuis les extrémités libres des crochets, et en position de travail sont orientées dans une direction principalement horizontale respectivement verticale.

4. Unité de transport (1; 21) selon la revendication 3, **caractérisée en ce que** les crochets (17; 37) peuvent tourner vers l'extérieur depuis la position de repos, où les crochets de l'une des rangées peuvent s'écarter en tournant des crochets de l'autre rangée.

5. Unité de transport (1; 21) selon la revendication 2 ou 3, **caractérisée en ce qu'**une partie (17B; 37B) des crochets suit un arc de cercle depuis les extrémités libres, où le centre de rotation (19) autour duquel tourne le crochet (17; 37B) se trouve au centre de l'arc de cercle.

6. Unité de transport (1) selon une des revendications précédentes, **caractérisée en ce que** le bras (9) est pourvu, en une extrémité, d'ouvertures à travers lesquelles peuvent s'enfiler les branches d'une fourche d'un chariot élévateur.
